**Europäisches Patentamt**

(19) **European Patent Office**

**Office européen des brevets**

(11) Numéro de publication : **0 060 172 B1**

(12) **FASCICULE DE BREVET EUROPÉEN**

(45) Date de publication du fascicule du brevet :
20.02.85

(51) Int. Cl.⁴ : **H 02 P 1/42, H 01 H 61/00**

(21) Numéro de dépôt : **82400311.5**

(22) Date de dépôt : **22.02.82**

(54) **Dispositif de protection du moteur d'un ensemble moteur-compresseur hermétique.**

(30) Priorité : 03.03.81 FR 8104191

(43) Date de publication de la demande :
15.09.82 Bulletin 82/37

(45) Mention de la délivrance du brevet :
20.02.85 Bulletin 85/08

(84) Etats contractants désignés :
AT BE CH DE FR GB IT LI LU NL SE

(56) Documents cités :
FR-A- 2 345 841
FR-A- 2 348 558
FR-A- 2 420 045
US-A- 4 100 468

(73) Titulaire : **REALISATIONS ET DIFFUSION POUR L'INDUSTRIE (R D I)**
**32, Rue Bréguet**
**F-75523 Paris Cedex 11 (FR)**

(72) Inventeur : **Lebatard, Alain**
**13, Rue des Abbesses**
**F-60350 Saint-Jean aux Bois (FR)**
Inventeur : **Alvarez, Antonio**
**30 Bis, Rue Bréguet**
**F-75011 Paris (FR)**

(74) Mandataire : **Rinuy, Guy et al**
**Cabinet Rinuy et Santarelli 14, Avenue de la Grande Armée**
**F-75017 Paris (FR)**

## Description

La présente invention se rapporte à un dispositif de protection du moteur d'un ensemble moteur-compresseur hermétique. Les fabricants de compresseurs hermétiques utilisent actuellement un relais magnétique de démarrage et un thermostat de sécurité, à disque cloquant par exemple, monté à l'extérieur du compresseur pour, d'une part, le démarrage et, d'autre part, la protection du moteur.

Les résistances CTP à coefficient de température positif peuvent remplacer avantageusement les relais magnétiques de démarrage (fonctionnement plus fiable, réduction de fil de cuivre dans la phase auxiliaire du moteur, prix plus bas), mais obligent à utiliser une protection du moteur ayant un temps de réenclenchement très long, supérieur au temps de refroidissement de la CTP.

Depuis plusieurs années on ne sait le plus souvent résoudre ce problème qu'en utilisant un thermostat de sécurité interne, c'est-à-dire monté sur le stator du moteur, à l'intérieur du compresseur qui est hermétiquement soudé. Ce système présente deux inconvénients majeurs. En premier lieu le thermostat de sécurité utilisé pour cet usage est très cher et coûte environ deux fois le prix d'un thermostat de sécurité normal. En second lieu ce système rend l'ensemble moteur-compresseur inutilisable en cas de détérioration du thermostat de sécurité qui est monté intérieurement sur le stator du moteur.

On connaît par ailleurs par le brevet français 2 348 558 un dispositif dans lequel la CTP et le thermostat sont placés dans un même boîtier et un couplage thermique est créé entre la CTP et le thermostat.

En cas de surintensité passant dans le thermostat et d'échauffement excessif du moteur, la température de la CTP, parcourue toujours par le même courant, reste constante. L'énergie accumulée par la CTP ne s'accroît pas.

Or si les contacts s'ouvrent, la chaleur transmise par la CTP au thermostat ne peut retarder la fermeture des contacts que si cette température de refermeture est nettement inférieure à la température en régime normal.

Ce système ne peut donc pas fonctionner correctement avec un gradient de température faible, compris entre la température d'équilibre de la CTP et la température de refermeture des contacts.

La présente invention vise un dispositif de protection du moteur d'un ensemble moteur-compresseur hermétique, comportant à l'extérieur dudit ensemble une résistance CTP à coefficient de température positif, ainsi qu'un thermostat classique, une accumulation thermique obtenue au niveau dudit thermostat établissant, lors d'une coupure intempestive de l'alimentation, un retard au refroidissement du thermostat, de manière que le temps de réenclenchement dudit thermostat soit supérieur au temps de refroidissement de ladite résistance CTP, caractérisé en ce qu'une équivalence thermique du moteur est réalisée au moyen d'un enroulement accumulateur entourant ledit thermostat classique et parcouru par le courant alimentant le moteur, ladite résistance CTP étant de plus isolée dudit enroulement et dudit thermostat.

Selon l'invention, une accumulation de chaleur destinée à retarder la refermeture des contacts, se produit pendant le fonctionnement normal mais surtout pendant le fonctionnement anormal du moteur puisque l'enroulement accumulateur prévu est parcouru par le courant alimentant le moteur.

Dès que les contacts s'ouvrent, l'enroulement transmet sa chaleur et retarde la refermeture des contacts. On a donc un gradient de température beaucoup plus important que dans les systèmes connus et notamment celui du brevet français 2 348 558.

La CTP est isolée thermiquement dudit enroulement et non couplée thermiquement comme dans le brevet français 2 348 558.

D'autres caractéristiques et avantages de la présente invention ressortiront de la description qui va suivre faite en regard du dessin annexé sur lequel :

la figure 1 est une vue schématique d'un groupe moteur-compresseur hermétique auquel est associé un dispositif selon l'invention ; et

la figure 2 est une vue en perspective d'un thermostat de sécurité à accumulateur thermique conforme à l'invention.

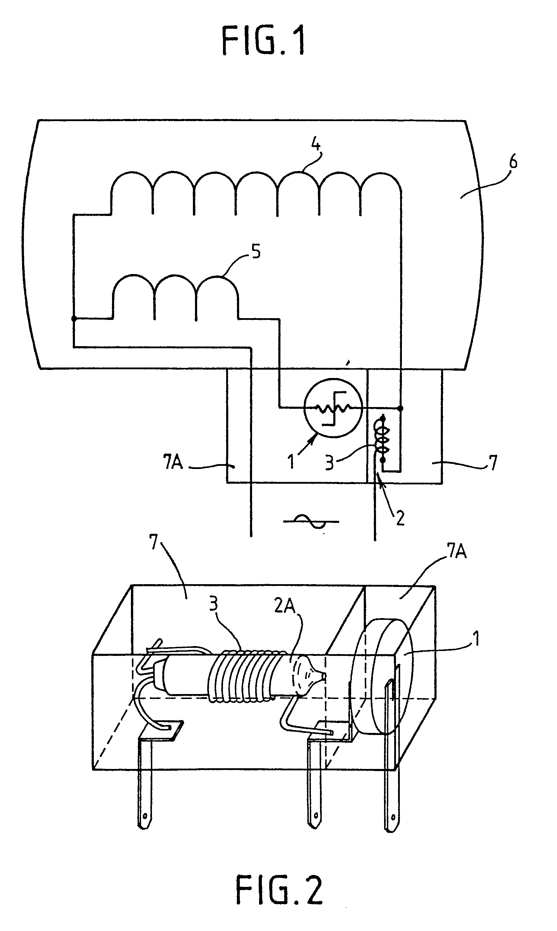

Dans la forme de réalisation représentée à la figure 1 un dispositif selon l'invention comprend, d'une part une résistance de démarrage CTP (1) et d'autre part, un thermostat classique (2) de protection du moteur. Ce dispositif est complété par un enroulement (3) destiné à créer autour du thermostat (2) une équivalence ou image thermique du moteur dont la phase principale est indiquée en (4) et la phase auxiliaire de démarrage en (5).

Le thermostat (2A) et l'enroulement (3) peuvent être groupés sous un même ensemble formant boîtier (7) relié au secteur et au moteur.

L'ensemble (7) peut être disposé contre le groupe hermétique (6).

L'indépendance de cet ensemble permet cependant de le disposer, éventuellement, à distance du groupe hermétique (6). Le fait de le mettre contre le groupe hermétique ou à proximité de celui-ci permet de profiter de la chaleur rayonnante pour la création de l'image thermique.

La résistance CTP (1) est placée en dehors du groupe hermétique et en dehors du boîtier (7).

Tout en restant à l'extérieur de l'ensemble moteur-compresseur, la résistance CTP (1) peut être disposée dans un compartiment (7A) isolé thermiquement de l'ensemble (7).

Suivant un mode de réalisation pratique représenté à la figure 2 le thermostat est un thermostat bilame du type à ampoule de verre (2A) et l'enroulement (3) entoure ladite ampoule.

Le thermostat (2) peut, outre l'aspect sous ampoule de verre, revêtir les formes connues actuelles du commerce par exemple parallélépipédique ou cylindrique (non représentées).

Suivant un autre mode de réalisation de l'invention le thermostat (2) et l'enroulement (3) sont noyés dans une matière appropriée permettant d'augmenter la capacité d'accumulation de chaleur.

De toute manière, quel que soit le mode de réalisation, l'enroulement (3) constitue un moyen efficace permettant d'obtenir un retard de refroidissement du thermostat classique utilisé, ce refroidissement pouvant être de trois minutes au lieu de, par exemple, une minute suivant le thermostat adopté.

## Revendications

1. Dispositif de protection du moteur d'un ensemble moteur-compresseur hermétique (6), comportant à l'extérieur dudit ensemble une résistance CTP à coefficient de température positif (1), ainsi qu'un thermostat classique (2), une accumulation thermique obtenue au niveau dudit thermostat (2) établissant, lors d'une coupure intempestive de l'alimentation, un retard au refroidissement du thermostat (2), de manière que le temps de réenclenchement dudit thermostat (6) soit supérieure au temps de refroidissement de ladite résistance CTP (1), caractérisé en ce qu'une équivalence thermique du moteur est réalisée au moyen d'un enroulement accumulateur (3) entourant ledit thermostat classique (2) et parcouru par le courant alimentant le moteur, ladite résistance CTP étant de plus isolée dudit enroulement et dudit thermostat.

2. Dispositif selon la revendication 1 caractérisé en ce qu'au moins le thermostat (2) et l'enroulement (3) sont contenus sous un ensemble (7) à l'extérieur du groupe hermétique (6) la résistance CTP (1) étant placée en un autre endroit mais également à l'extérieur du groupe hermétique.

3. Dispositif selon la revendication 2 caractérisé en ce que l'ensemble (7) est placé contre ou à proximité du groupe hermétique (6).

4. Dispositif selon la revendication 2 caractérisé en ce que l'ensemble (7) est placé à distance du groupe hermétique (6).

5. Dispositif selon l'une quelconque des revendications 2 à 4 caractérisé en ce que le thermostat (2) et l'enroulement (3) sont noyés dans une matière permettant d'augmenter la capacité d'accumulation de chaleur.

6. Dispositif selon l'une quelconque des revendications 2 à 5 caractérisé en ce que la résistance CTP (1) est placée dans un compartiment (7A) de l'ensemble (7).

7. Dispositif selon l'une quelconque des revendications 2 à 6 caractérisé en ce que le thermostat classique utilisé est un thermostat sous ampoule (2A) l'enroulement (3) étant enroulé autour.

## Claims

1. A protection device for a motor in a hermetically sealed motor and compressor assembly (6) comprising outwardly of said assembly a positive temperature coefficient resistor CTP (1) as well as a conventional thermostat (2), with thermal accumulation obtained at said thermostat (2) setting up, on undesired switching off of the power supply, a cooling delay in the thermostat (2) such that the time for switching on again said thermostat (6) is higher than the time for cooling said resistor CTP (1), characterized in that thermal equivalence of the motor is realized by means of an accumulating winding (3) surrounding said conventional thermostat (2) and through which current supplying the motor flows, said resistor CTP being moreover isolated from said winding and said thermostat.

2. A device according to claim 1, characterized at least the thermostat (2) and the winding (3) are contained in an assembly (7) outwardly of the hermetically sealed group (6), with resistor CTP (1) being disposed at another location but also outwardly of the hermetically sealed assembly.

3. A device according to claim 2, characterized in that the assembly (7) is disposed against or close to the hermetic assembly (6).

4. A device according to claim 2, characterized in that the assembly (7) is disposed at a distance from the hermetic group (6).

5. A device according to any one of claims 2 to 4, characterized in that the thermostat (2) and the winding (3) are embedded in such a material as to permit increase in the heat accumulation capacity.

6. A device according to any one of claims 2 to 5, characterized in that the resistor CTP (1) is disposed in a compartment (7A) of the assembly (7).

7. A device according to any one of claims 2 to 6, characterized in that the conventional thermostat used is a thermostat in a bulb (2A) with the winding (3) being wound therearound.

## Ansprüche

1. Schutzvorrichtung für einen Motor einer hermetisch verschlossenen Motor-Kompressoreinheit (6), mit einem CTP-Widerstand (1) mit positiven Temperaturkoeffizienten außerhalb der Einheit ebenso wie einem klassischen Thermostaten (2), wobei eine beim Niveau des Thermostaten (2) erhaltene Wärmeansammlung bei einem unzeitigen Abschalten der Speisung eine Abkühlungs-Verzögerung für den Thermostaten (2) ergibt, derart, daß die Wiedereinschaltdauer des Thermostaten (6) größer als die Abkühldauer des CTP-Widerstandes (1) ist, dadurch gekennzeichnet, daß ein thermisches Äquivalent des Motors mittels einer Speicherwicklung (3), die den klassischen Thermostaten (2) umgibt und von dem den Motor speisenden Strom durchflossen ist, gebildet ist, wobei der CTP-Widerstand außerdem gegenüber der Wicklung und dem Thermostaten isoliert ist.

2. Vorrichtung nach Anspruch 1, dadurch gekennzeichnet, daß mindestens der Thermostat (2) und die Wicklung (3) in einem Aufbau (7) außerhalb der hermetisch umschlossenen Gruppe (6) enthalten sind, wobei der CTP-Widerstand (1) an eine andere Stelle, jedoch gleichermaßen außerhalb der hermetisch umschlossenen Gruppe, gesetzt ist.

3. Vorrichtung nach Anspruch 2, dadurch gekennzeichnet, daß der Aufbau (7) an die hermetisch umschlossene Gruppe (7) angesetzt oder in ihre Nähe gesetzt ist.

4. Vorrichtung nach Anspruch 2, dadurch gekennzeichnet, daß der Aufbau (7) mit Abstand von der hermetisch umschlossenen Gruppe (6) angeordnet ist.

5. Vorrichtung nach einem der Ansprüche 2 bis 4, dadurch gekennzeichnet, daß der Thermostat (2) und die Wicklung (3) in eine Materie eingetaucht sind, die die Kapazität des Wärmespeichers zu erhöhen erlaubt.

6. Vorrichtung nach einem der Ansprüche 2 bis 5, dadurch gekennzeichnet, daß der CTP-Widerstand (1) in einem Fach (7A) des Aufbaus (7) angeordnet ist.

7. Vorrichtung nach einem der Ansprüche 2 bis 6, dadurch gekennzeichnet, daß der benutzte klassische Thermostat ein Thermostat in einem Gefäß (2A) ist, um welches die Wicklung (3) herumgewickelt ist.

**FIG.1**

**FIG.2**